# EUROPEAN PATENT APPLICATION

(11) **EP 1 416 670 A1**
(43) Date of publication of application: **06.05.2004**
(21) Application number: 02360287.3
(22) Date of filing: 21.10.2002
(51) Int. Cl.: H04L 12/26, H04M 7/00, H04L 12/64

(54) **IP-continuity test (IP-COT)**

(71) Applicant: ALCATEL, 75008 Paris (FR)
(72) Inventor: Baeder, Rainer, 70771 Leinfelden (DE)
(74) Representative: Menzietti, Domenico, Dipl.-Ing

(57) **Abstract**

It is an object of the invention to provide continuity tests in mixed networks. The invention provides a computer program for a trunk gateway (TGW A) having specific computer program codes to enable the trunk gateway (TGW A) to perform the following steps when run on the hardware of the trunk gateway (TGW A): generating and sending a COT request tone via Internet (IP) or ATM to another trunk gateway (TGW B) or via another protocol, e.g. H.248, to a call server (CLS) and receiving and detecting a corresponding COT response from another trunk gateway (TGW B) or a call server (CLS).

## Description

### Technical field:

The invention concerns a continuity test (COT) for the internet (IP) and/or ATM.

### Background of the invention:

A plain switched telephone network (PSTN) includes a plurality of exchanges interconnected with each other via two different networks, the signalling network and the transmission network. The signalling network usually uses the so called no. 7 protocol. The transmission network usually uses an intermachine trunk (IMT). The intermachine trunk usually makes use of a so called PCM 30 link which is a pulse code multiplex link with 32 time slots; one time slot is used for framing the other 31 time slots are used for voice and/or data transmission. To each exchange a plurality of subscribers is connected. In such a PSTN network COTs (continuity test) shall be performed from time to time between exchanges. The continuity test serves to test whether a connection between two exchanges is guaranteed. It is performed e.g. in the following way: Exchange no.1 sends a COT request tone via a signaling connection (no. 7 protocol) to exchange no.2 . Exchange no. 2 sends the received COT request back to exchange no. 1 via a data connection (IMT = intermachine trunk). Exchange no.1 receives the resended COT request. If the received COT request corresponds to the sended COT request the continuity test is successfully performed. If the received COT request does not correspond to the sended COT request or in case no COT request is received the continuity test failed and will be repeated. If again the received COT request does not correspond to the sended COT request or in case no COT request is received the continuity test failed again and an alarm will be generated to inform a skilled person to check the connection and to repair it.

If exchange no.1 and exchange no.2 are interconnected partly via IP (internet protocol) no such COT is performed for the whole connection. A COT is only performed between EX1 and the trunk gateway (TGW) connected to the Internet.

### Summary of the invention:

It is an object of the invention to provide continuity tests in mixed networks.

The invention provides a computer program for a trunk gateway having specific computer program codes to enable the trunk gateway to perform the following steps when run on the hardware of the trunk gateway:
generating and sending a COT request tone via Internet or ATM to another trunk gateway or via another protocol to a call server and receiving and
detecting a corresponding COT response from another trunk gateway or a call server.

The invention further provides a computer program for a call server having specific computer program codes to enable the call server to perform the following step when run on the hardware of the call server: generating and sending a trigger signal to a trunk gateway to send out an IP-COT request via the Internet to another trunk gateway and/or to send out an ATM-COT request via ATM to another trunk gateway.

Instead of implementing the invention is a software computer program the invention could also be realized in hardware or hardware + software.

An inventive call server is being configured such as to trigger a trunk gateway to send out an IP-COT request via the Internet to another trunk gateway and/or to send out an ATM-COT request via ATM to another trunk gateway.

An inventive trunk gateway is being configured such as to send out an IP-COT request via the Internet to another trunk gateway and/or to send out an ATM-COT request via ATM to another trunk gateway.

An inventive method for testing the continuity of an IP connection includes the steps of sending an IP-COT request from a first trunk gateway to a second trunk gateway via Internet, receiving the IP-COT request in the second trunk gateway, mirroring back the received IP-COT request from the second trunk gateway to the first trunk gateway or generating an IP-COT response in the second trunk gateway and sending the response back to the first trunk gateway via Internet.

In a preferred embodiment of the invention the inventive method further includes the step of sending the IP-COT request from the first trunk gateway to the second trunk gateway after receipt of a trigger tone from a call server.

A further inventive method for testing the continuity of an IP connection, includes the steps of sending a trigger signal from a call server to a first trunk gateway to send out an IP-COT request tone to a second trunk gateway, sending the IP-COT request from the first trunk gateway to the second trunk gateway via Internet, receiving the IP-COT request in second trunk gateway, sending the IP-COT request or a generated COT response from the second trunk gateway to the call server.

In a preferred embodiment of the invention the further inventive method further includes the step of sending the received IP-COT request or the received generated COT response or a generated COT response from the call server to the first trunk gateway.

A further inventive method for testing the continuity of an IP connection, includes the steps of sending an IP-COT request tone from a first trunk gateway to a call server, sending a trigger signal from the call server to a second trunk gateway to send out an IP-COT response to the first trunk gateway, sending the IP-COT response from the second trunk gateway to the first trunk gateway via Internet.

A still further method according to the invention for testing the continuity of a connection between a first exchange and a second exchange being interconnected via the Internet by means of two trunk gateways, includes the steps of testing the continuity of the connection between the first exchange and the first trunk gateway, testing the continuity of the Internet connection between the first trunk gateway and the second trunk gateway, and testing the continuity of the connection between the second trunk gateway and the second exchange.

In a further preferred embodiment of the invention testing the continuity of the connection between the first exchange and the first trunk gateway is performed by sending a COT request tone from the first exchange to a call server, sending a trigger signal to sent out a COT signal from the call server to the first trunk gateway, sending the COT signal from the first trunk gateway to the first exchange, detecting the COT signal received from the first trunk gateway in the first exchange, wherein testing the continuity of the Internet connection between the first trunk gateway and the second trunk gateway is performed by sending a further trigger signal to sent out a COT request tone from the call server to the first trunk gateway, sending a COT request tone from the first trunk gateway to the second trunk gateway, sending of a COT signal from the second trunk gateway to the call server after receipt of the COT request, detecting the COT signal received from the second trunk gateway in the call server, and wherein testing the continuity of the connection between the second trunk gateway and the second exchange is performed by sending a further trigger signal to sent out a COT request tone from the call server to the second trunk gateway, sending a COT request tone from the second trunk gateway to the second exchange, sending of a COT signal from the second exchange to the call server after receipt of the COT request, detecting the COT signal received from the second exchange in the call server.

In a further preferred embodiment of the invention testing the continuity of the connection between the first exchange and the second exchange is done using a transparent COT, wherein the first exchange sends a COT request tone to a call server, the call server sends a trigger signal to the second exchange to sent out a transparent COT to the second trunk gateway, the second exchange sends the transparent COT to the second trunk gateway, the second trunk gateway forwards the received transparent COT to the first trunk gateway, the first trunk gateway forwards the received transparent COT to the first exchange.

The invention has the advantage of enabling COT in IP and ATM. The invention provides a new feature for next generation networks and mixed networks (PSTN + IP, PSTN + ATM, etc.).

In a further preferred embodiment of the invention the connection between a first exchange and a second exchange is subdivided in three parts, the first one from the first exchange to a first trunk gateway, the second from the first trunk gateway to a second trunk gateway, both being connected to the internet, and the third from the second trunk gateway to the second exchange. For each part a single COT is done, thus resulting in totally three COTs for the whole connection. The COT between the first and the second trunk gateway is named IP-COT as it provides a continuity test via the Internet.

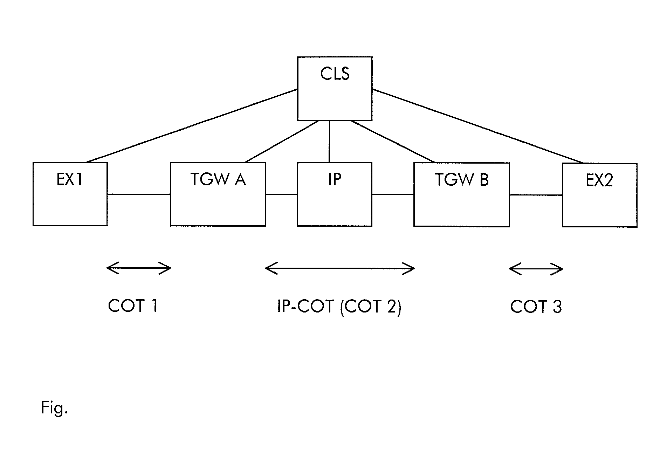

### Brief description of the drawing:

The single figure shows a simplified block diagram of a first embodiment of the invention including a first exchange EX1 and a second exchange EX2 being interconnected via the Internet IP by means of two trunk gateways TGW A, TGW B. A call server CLS has access to exchanges EX1 and EX2, trunk gateways TGW A and TGW B, and the Internet IP.

### Best mode for carrying out the invention:

The implementation of the first embodiment of the invention includes the following steps:
Continuity test COT1:
   Exchange EX1 sends a COT request tone via signalling protocol no.7 to call server CLS. The COT request tone includes e.g. the originating point code (OPC) and the destination point code (DPC).
      Call server CLS triggers trunk gateway TGW A via a so called H.248 protocol or another protocol to send COTI to exchange EX1. The trigger signal could be the received COT request tone, a COT signal generated or stored in the call server or a predetermined trigger pulse or the like.
      Trunk gateway TGW A send COT1 via intermachine trunk IMT to exchange EX1. COT1 could be the received COT request tone, a COT signal generated or stored in trunk gateway TGW A or the like.
      Exchange EX1 detects COT1.
Continuity test COT2:
   Call server CLS triggers trunk gateway TGW A via H.248 protocol or another protocol to send COT 2 (IP-COT) to trunk gateway TGW B. The trigger signal could be a COT request tone, a COT signal generated or stored in the call server or a predetermined trigger pulse or the like. COT 2 could be a COT request tone, a COT signal generated or stored in trunk gateway TGW A or the like. COT 1 and COT 2 could be equal or different.
   Call server CLS triggers trunk gateway TGW B via H.248 protocol or another protocol to send received COT 2 back to trunk gateway TGW A.
   Instead of sending received COT 2 back another COT request tone, a COT signal generated or stored in trunk gateway TGW B or the like could be send back.
   Trunk gateway TGW A sends COT 2 via the Internet to trunk gateway TGW B.
   Trunk gateway TGW B sends an appropriate response via the Internet back to trunk gateway TGW A.
   Trunk gateway TGW A detects the response.
   Optionally TGW A sends an ok message either to exchange EX1 or to call server CLS.
Continuity test COT3:
   Call server CLS triggers trunk gateway TGW B via H.248 protocol or another protocol to send COT 3 to exchange EX2. The trigger signal could be a COT request tone, a COT signal generated or stored in the call server or a predetermined trigger pulse or the like. COT 3 could be a COT request tone, a COT signal generated or stored in trunk gateway TGW A or the like. COT 1, COT 2 and COT 3 could be equal or different.
   Call server CLS triggers exchange EX2 via signalling protocol no.7 to send received COT 3 back to trunk gateway TGW B. Instead of sending received COT 3 back another COT request tone, a COT signal generated or stored in trunk gateway TGW B or the like could be send back.
   Trunk gateway TGW B sends COT 3 via intermachine trunk IMT to exchange EX2.
   Exchange EX2 sends an appropriate response via intermachine trunk IMT back to trunk gateway TGW B.
   Trunk gateway TGW B detects the response.
   Optionally trunk gateway TGW B sends an ok message either to exchange EX1 or to call server CLS.
   Optionally call sever CLS sends ok messages related to COT2 and COT3 to exchange EX1.

The implementation of a second embodiment of the invention includes the following steps:
Continuity tests COT1 + COT2 + COT3:
   Exchange EX1 sends a COT request tone via signalling protocol no.7 to the call server CLS.
   Call server CLS triggers trunk gateway TGW A via H.248 protocol or another protocol to send COT 2 (IP-COT) to trunk gateway TGW B.
   Call server CLS triggers trunk gateway TGW B via H.248 protocol or another protocol to send received COT 2 back to trunk gateway TGW A. Trunk gateway TGW A sends COT 2 via Internet IP to trunk gateway TGW B.
   Trunk gateway B sends COT 2 back to trunk gateway TGW A via Internet IP.
   Trunk gateway TGW A detects COT 2.
   Trunk gateway TGW A sends an ok message via H.248 protocol or another protocol to call server CLS.
   Call server CLS triggers trunk gateway TGW B via H.248 protocol or another protocol to send COT 3 to exchange EX2.
   Call server CLS triggers exchange EX2 via signalling protocol no. 7 to send received COT 3 back to trunk gateway TGW B.
   Trunk gateway TGW A sends COT 3 via intermachine trunk IMT to exchange EX2.
   Exchange EX2 sends COT 3 back to trunk gateway TGW A via intermachine trunk IMT.
   Trunk gateway TGW B detects COT 3.
   Trunk gateway TGW B sends an ok message via H.248 protocol or another protocol to call server CLS.
   Call server CLS triggers trunk gateway TGW A via H.248 protocol or another protocol to send COT1 to exchange EX1.
   Trunk gateway TGW A sends COT1 via intermachine trunk IMT to exchange EX1.
   Exchange EX1 detects COT1.

Alternatively: Instead of sending a COT request tone COT 2 and/or COT 3 and sending the same tone back another tone or signal could be generated and send back. The generation of the other tone or signal could be performed using e.g. a digital signal processor.

The implementation of a third embodiment of the invention includes the following steps:
Continuity tests COT1 + COT2 + COT3:
   Exchange EX1 sends a COT request tone via signalling protocol no.7 to the call server CLS.
   Call server CLS triggers trunk gateway TGW A to send COT 2 (IP-COT) to trunk gateway TGW B via IP.
   Call server CLS triggers trunk gateway TGW B to send received COT 2 back to call server CLS.
   Trunk gateway TGW A sends COT 2 to trunk gateway TGW B via IP.
   Trunk gateway TGW B sends received COT 2 back to call server CLS.
   Call server CLS triggers trunk gateway TGW B to send COT 3 to exchange EX2 via IMT.
   Call server CLS triggers exchange EX2 to send received COT 3 back to call server CLS via signalling protocol no.7.
   Trunk gateway TGW B sends COT 3 to exchange EX2 via IMT.
   Exchange EX2 sends received COT 3 back to call server CLS via signalling protocol no.7.
   Call server CLS triggers trunk gateway TGW A to send COT1 to exchange EX1 via IMT.
   Trunk gateway TGW A sends COTI to exchange EX1 via IMT.
   Exchange EX1 detects COT1.

Alternatively: Instead of sending a COT request tone COT 1 and/or COT 2 and/or COT 3 and sending the same tone back another tone or signal could be generated and send back.

The implementation of a fourth embodiment of the invention includes the following steps:
Continuity tests COT1 + COT2 + COT3:
   Exchange EX1 sends a COT request tone via signalling protocol no.7 to call Server CLS.
   Call server CLS triggers trunk gateway TGW A to send COT 2 (IP-COT) to trunk gateway TGW B via IP.
   Call sever CLS triggers trunk gateway TGW B to send received COT 2 back to call server CLS.
   Trunk gateway TGW A sends COT 2 (IP-COT) to trunk gateway TGW B via IP.
   Trunk gateway TGW B sends received COT 2 back to call server CLS.
   Call server CLS triggers exchange EX2 to send COT 3 to trunk gateway TGW B via IMT.
   Call server CLS triggers trunk gateway TGW B to send received COT 3 back to call server CLS.
   Exchange EX2 sends COT 3 to trunk gateway TGW B via IMT.
   Trunk gateway TGW B sends received COT 3 back to call server CLS.
   Call server CLS triggers trunk gateway TGW A to send COT1 to exchange EX1 via IMT.
   Trunk gateway TGW A sends COT1 to exchange EX1 via IMT.
   Exchange EX1 detects COT1.

Alternatively: Instead of sending a COT request tone COT 1 and/or COT 2 and/or COT 3 and sending the same tone back another tone or signal could be generated and send back.

The implementation of a fifth embodiment of the invention includes the following steps:
Continuity test COT 2 (self test or COT initiated by trunk gateway TGW A):
   Trunk gateway TGW A sends a COT request tone via H.248 protocol or another protocol to call Server CLS.
   Call server CLS triggers trunk gateway TGW B to send COT 2 (IP-COT) to trunk gateway TGW A via IP.
   Trunk gateway TGW B sends COT 2 (IP-COT) to trunk gateway TGW A via IP.
   Trunk gateway TGW A detects COT 2.
   Alternatively: Instead of sending a COT request tone COT 2 and sending the same tone back another tone or signal could be generated and send back.

The implementation of a sixth embodiment of the invention includes the following steps:
Continuity test COT1:
   Exchange EX1 sends a COT request tone via signalling protocol no.7 to call server CLS.
   Call server CLS triggers trunk gateway TGW A via a so called H.248 protocol or another protocol to send COT1 to exchange EX1. The trigger signal could be the received COT request tone, a COT signal generated or stored in the call server or a predetermined trigger pulse or the like.
   Trunk gateway TGW A send COT1 via intermachine trunk IMT to exchange EX1. COT1 could be the received COT request tone, a COT signal generated or stored in trunk gateway TGW A or the like.
   Exchange EX1 detects COT1.
Continuity test COT 2:
   After receipt of the trigger signal trunk gateway TGW A sends a COT request tone via H.248 protocol or another protocol to call Server CLS. Call server CLS triggers trunk gateway TGW B to send COT 2 (IP-COT) to trunk gateway TGW A via IP.
   Trunk gateway TGW B sends COT 2 (IP-COT) to trunk gateway TGW A via IP.
   Trunk gateway TGW A detects COT 2.
   Alternatively: Instead of sending a COT request tone COT 2 and sending the same tone back another tone or signal could be generated and send back.
Continuity test COT 3:
   After receipt of the trigger signal trunk gateway TGW B sends a COT request tone via H.248 protocol or another protocol to call Server CLS. Call server CLS triggers exchange EX2 to send COT 3 to trunk gateway TGW B via IMT.
   Exchange EX2 sends COT 3 to trunk gateway TGW B via IMT.
   Trunk gateway TGW B detects COT 3.
   Alternatively: Instead of sending a COT request tone COT 3 and sending the same tone back another tone or signal could be generated and send back.

The implementation of a seventh embodiment of the invention includes the following steps:
Continuity test transparent COT:
   Exchange EX1 sends a COT request tone via signalling protocol no.7 to call server CLS.
   Call server CLS triggers exchange EX2 via signalling protocol no.7 to send a transparent COT to trunk gateway TGW B. The transparent COT could be COT 1, COT 2, COT 3, the COT request tone, or another tone or signal generated in exchange EX2. The trigger signal could be the received COT request tone, a COT signal generated or stored in the call server or a predetermined trigger pulse or the like.
   Call server CLS triggers trunk gateway TGW B to forward received transparent COT to trunk gateway TGW A.
   Call server CLS triggers trunk gateway TGW A to forward received transparent COT to exchange EX1.
   Exchange EX2 sends the transparent COT to trunk gateway TGW B via IMT. Trunk gateway TGW B forwards the received transparent COT to trunk gateway TGW A via the Internet.
   Trunk gateway TGW A forwards the received transparent COT to exchange EX1 via IMT.

Further embodiments of the invention are apparent to a man skilled in the art by e.g. combining the above embodiments in part. The steps to perform the continuity tests disclosed in the embodiments are not always strictly to be performed in the order given; a man skilled in the art may vary the sequence of at least some of the steps when implementing the invention.

The principle of the invention could in particular be applied to voice over IP, but could also be applied to perform continuity tests for voice and/or data and/or video over ATM. Trunk gateways being connected via ATM will then perform continuity tests in an analog manner.

### Abbreviation list:

- ATM: Asynchronous Transfer Mode
- CLS: call server
- COT: continuity test
- DPC: destination point code
- EX: exchange
- IMT: intermachine trunk
- IP: Internet, Internet Protocol
- OPC: originating point code
- PSTN: plain switched telephone network
- TGW: trunk gateway

## Claims

1. Call Server (CLS) being configured such as to trigger a trunk gateway (TGW A) to send out an IP-COT request via the Internet to another trunk gateway (TGW B) and/or to send out an ATM-COT request via ATM to another trunk gateway (TGW B).

2. Trunk gateway (TGW A) being configured such as to send out an IP-COT request via the Internet to another trunk gateway (TGW B) and/or to send out an ATM-COT request via ATM to another trunk gateway (TGW B).

3. Method for testing the continuity of an IP connection, including the steps of sending an IP-COT request from a first trunk gateway (TGW A) to a second trunk gateway (TGW B) via Internet, receiving the IP-COT request in the second trunk gateway (TGW B), mirroring back the received IP-COT request from the second trunk gateway (TGW B) to the first trunk gateway (TGW A) or generating an IP-COT response in the second trunk gateway (TGW B) and sending the response back to the first trunk gateway (TGW A) via Internet.

4. Method according to claim 3, further including the step of sending the IP-COT request from the first trunk gateway (TGW A) to the second trunk gateway (TGW B) after receipt of a trigger tone from a call server (CLS).

5. Method for testing the continuity of an IP connection, including the steps of sending a trigger signal from a call server (CLS) to a first trunk gateway (TGW A) to send out an IP-COT request tone to a second trunk gateway (TGW B), sending the IP-COT request from the first trunk gateway (TGW A) to the second trunk gateway (TGW B) via Internet, receiving the IP-COT request in second trunk gateway (TGW B), sending the IP-COT request or a generated COT response from the second trunk gateway (TGW B) to the call server (CLS).

6. Method according to claim 5, further including the step of sending the received IP-COT request or the received generated COT response or a generated COT response from the call server (CLS) to the first trunk gateway (TGWA).

7. Method for testing the continuity of an IP connection, including the steps of sending an IP-COT request tone from a first trunk gateway (TGW A) to a call server (CLS), sending a trigger signal from the call server (CLS) to a second trunk gateway (TGW B) to send out an IP-COT response to the first trunk gateway (TGW B), sending the IP-COT response from the second trunk gateway (TGW B) to the first trunk gateway (TGW A) via Internet.

8. Computer program for a trunk gateway (TGW A) having specific computer program codes to enable the trunk gateway (TGW A) to perform the following steps when run on the hardware of the trunk gateway (TGW A): generating and sending a COT request tone via Internet or ATM to another trunk gateway (TGW B) or via another protocol to a call server (CLS) and receiving and detecting a corresponding COT response from another trunk gateway (TGW B) or a call server (CLS).

9. Computer program for a call server (CLS) having specific computer program codes to enable the call server (CLS) to perform the following step when run on the hardware of the call server (CLS): generating and sending a trigger signal to a trunk gateway (TGW A) to send out an IP-COT request via the Internet to another trunk gateway (TGW B) and/or to send out an ATM-COT request via ATM to another trunk gateway (TGW B).

10. Method for testing the continuity of a connection between a first exchange and a second exchange being interconnected via the Internet by means of two trunk gateways, including the steps of testing the continuity of the connection between the first exchange and the first trunk gateway, testing the continuity of the Internet connection between the first trunk gateway and the second trunk gateway, and testing the continuity of the connection between the second trunk gateway and the second exchange.

11. Method according to claim 10, wherein testing the continuity of the connection between the first exchange and the first trunk gateway is performed by sending a COT request tone from the first exchange to a call server, sending a trigger signal to sent out a COT signal from the call server to the first trunk gateway, sending the COT signal from the first trunk gateway to the first exchange, detecting the COT signal received from the first trunk gateway in the first exchange, wherein testing the continuity of the Internet connection between the first trunk gateway and the second trunk gateway is performed by sending a further trigger signal to sent out a COT request tone from the call server to the first trunk gateway, sending a COT request tone from the first trunk gateway to the second trunk gateway, sending of a COT signal from the second trunk gateway to the call server after receipt of the COT request, detecting the COT signal received from the second trunk gateway in the call server, and wherein testing the continuity of the connection between the second trunk gateway and the second exchange is performed by sending a further trigger signal to sent out a COT request tone from the call server to the second trunk gateway, sending a COT request tone from the second trunk gateway to the second exchange, sending of a COT signal from the second exchange to the call server after receipt of the COT request, detecting the COT signal received from the second exchange in the call server.

12. Method according to claim 10, wherein testing the continuity of the connection between the first exchange and the second exchange is done using a transparent COT, wherein the first exchange sends a COT request tone to a call server, the call server sends a trigger signal to the second exchange to sent out a transparent COT to the second trunk gateway, the second exchange sends the transparent COT to the second trunk gateway, the second trunk gateway forwards the received transparent COT to the first trunk gateway, the first trunk gateway forwards the received transparent COT to the first exchange.
